Europäisches Patentamt

European Patent Office

Office européen des brevets

(19)

(11) Publication number: **0 267 029 B1**

# EUROPEAN PATENT SPECIFICATION

(45) Date of publication of patent specification: **30.10.91**   (51) Int. Cl.⁵: **G11B 20/18**

(21) Application number: **87309777.8**

(22) Date of filing: **04.11.87**

(54) Methods of and apparatus for recording and/or reproducing digital data.

(30) Priority: **05.11.86 JP 263021/86**

(43) Date of publication of application:
**11.05.88 Bulletin  88/19**

(45) Publication of the grant of the patent:
**30.10.91 Bulletin  91/44**

(84) Designated Contracting States:
**AT DE ES FR GB IT NL SE**

(56) References cited:
**EP-A- 0 140 381**
**EP-A- 0 150 811**
**EP-A- 0 173 900**
**EP-A- 0 191 410**
**EP-A- 0 198 702**

(73) Proprietor: **SONY CORPORATION**
**7-35 Kitashinagawa 6-Chome Shinagawa-ku**
**Tokyo 141(JP)**

(72) Inventor: **Kaminaga, Kouzou c/o Patent Div.**
**Sony Corporation**
**7-35 Kitashinagawa 6-Chome Shinagawa-ku**
**Tokyo 141(JP)**

(74) Representative: **Thomas, Christopher Hugo et**
**al**
**D Young & Co 10 Staple Inn**
**London WC1V 7RD(GB)**

**Description**

This invention relates to methods of and apparatus for recording and/or reproducing digital data.

A digital video tape recorder (DVTR), in which a video signal is recorded on and reproduced from oblique tracks of a magnetic tape is disclosed, for example, in Japanese laid open patent publication 60-40573. In that DVTR, each field of a television signal is analogue to digital converted, and the resulting digital data are recorded on four consecutive oblique tracks of the magnetic tape.

First redundant symbols which may be words each of eight bits for an outer error correction code are generated from a first predetermined number of words each of eight bits, and constitute an outer error correction block together with the first predetermined number of words. Second redundant words each of eight bits for an inner error correction code are generated from a second predetermined number of words which are taken from the shuffled words in the outer error correction code blocks, and constitute an inner error correction block together with the second predetermined number of words.

At the beginning of each oblique track where the reproducing head starts tracing the track, the signal may not be reproduced perfectly, so that the digital data may not be extracted completely. Therefore, the reproduced data may contain many errors. Particularly in special reproducing modes, such as an operation with track jumping by a dynamic tracking head, the reproducing head traces several tracks at each pass, so that relatively long burst errors occur in the reproduced data, the length of which may extend beyond the error correction capability of the inner and outer codes.

European patent specification EP-A2-0 150 811 discloses a method and apparatus similar to the preambles of Claims 3 and 4 respectively.

According to the present invention there is provided a method of recording digital data, the method comprising the steps of:
dividing a digital data series into respective blocks each including a first predetermined number of data symbols;
generating outer error correction code blocks each including said first predetermined number of data symbols and a second predetermined number of redundant symbols;
generating inner correction code blocks each including a third predetermind number of data symbols and a fourth predetermined number of redundant symbols; and
recording said digital data series with said redundant symbols of said outer error correction code block and inner error correction code block on oblique tracks of a tape recording medium;
characterized in that:
said redundant symbols of said outer error correction code block are recorded first and followed by the data symbols and then by said redundant symbols of said inner error correction code block on said tracks.

According to the present invention there is also provided an apparatus for recording digital data, the apparatus comprising:
means for dividing a digital data series into respective blocks each including a first predetermined number of data symbols;
means for generating outer error correction code blocks each including said first predetermined number of data symbols and a second predetermined number of redundant symbols;
means for generating inner error correction code blocks each including a third predetermined number of data symbols and a fourth predetermined number of redundant symbols; and
means for recording said digital data series with said redundant symbols of said outer error correction code block and inner error correction code block on oblique tracks of a tape recording medium;
characterized in that:
said redundant symbols of said outer error correction code block are recorded first and followed by said data symbols and said redundant symbols of said inner error correction code block on said tracks.

According to the present invention there is also provided a method of reproducing digital data, the method comprising the steps of:
reproducing a digital data series with redundant symbols of an outer error correction code block and an inner error correction code block, whereby said redundant symbols are generated in such a manner that said digital data series is divided into respective blocks each including a first predetermined number of data symbols, said outer error correction code block is generated so as to include said first predetermined number of data symbols and a second predetermined number of said redundant symbols, and said inner error correction code block is generated so as to include a third predetermined number of data symbols and a fourth predetermined number of said redundant symbols;
decoding said inner error correction code block including said third predetermined number of data symbols and said fourth predetermined number of redundant symbols;
tagging an error flag if a predetermined number of error symbols exist in said inner error correction code block; and
decoding said outer error correction code block including said first predetermined number of data symbols and said second predetermined number of redundant symbols with said error flag to derive said digital data series;

characterized in that:

said redundant symbols of said outer error correction code block are reproduced first, followed by said data symbols and redundant symbols of said inner error correction code block from oblique tracks of a tape recording medium;

According to the present invention there is also provided an apparatus for reproducing digital data, the apparatus comprising:

means for reproducing a digital data series with redundant symbols of an outer error correction code block and an inner error correction code block, whereby said redundant symbols are generated in such a manner that said series of digital data is divided into respective blocks each including a first predetermined number of data symbols, said outer error correction code block is generated so as to include said first predetermined number of data symbols and a second predetermined number of said redundant symbols, and said inner error correction code block is generated so as to include a third predetermined number of data symbols and a fourth predetermined number of said redundant symbols;

means for decoding said inner error correction code block including said third predetermined number of said data symbols and said fourth predetermined number of redundant symbols;

means for tagging an error flag if a predetermined number of error symbols exists in said inner error correction code block; and

means for decoding said outer error correction code block including said first predetermined number of data symbols and said second predetermined number of redundant symbols with said error flag to derive said digital data series;

characterized in that:

said redundant symbols of said outer error correction code block are reproduced first, followed by said data symbols and redundant symbols of said inner error correction code block from oblique tracks of a tape recording medium.

The invention will now be described by way of example with reference to the accompanying drawings throughout which like parts are referred to by like references:

Figure 1 is a schematic block diagram showing a recording system of a DVTR of a type to which the present invention can be applied;

Figures 2A to 2C are diagrams showing one example of inter-sector shuffling before outer error correction blocks are formed from a video signal in the recording system of Figure 1;

Figure 3 is a diagram showing an arrangement of outer error correction codes from an error correction encoder and an intra-sector shuffling before inner error correction blocks are formed in the recording system of Figure 1;

Figure 4 is a diagram showing an arrangement of an inner error correction code from an error correction encoder in the recording system of Figure 1;

Figure 5 is a diagram showing a pattern of tracks in which a video signal and audio signals are digitally recorded by the recording system of Figure 1;

Figure 6 is a schematic block diagram showing a reproducing system of a DVTR of a type to which the present invention can be applied.

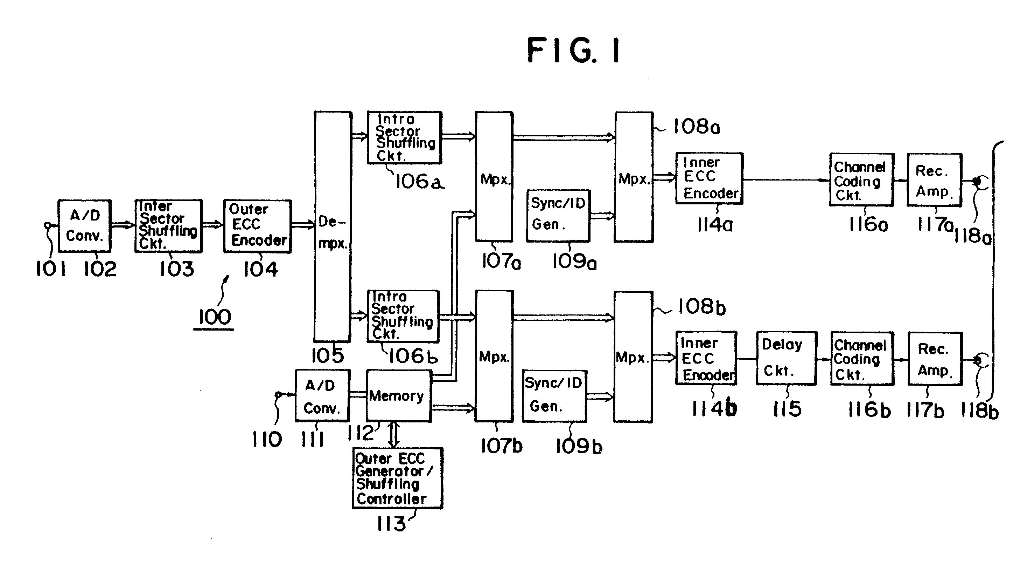

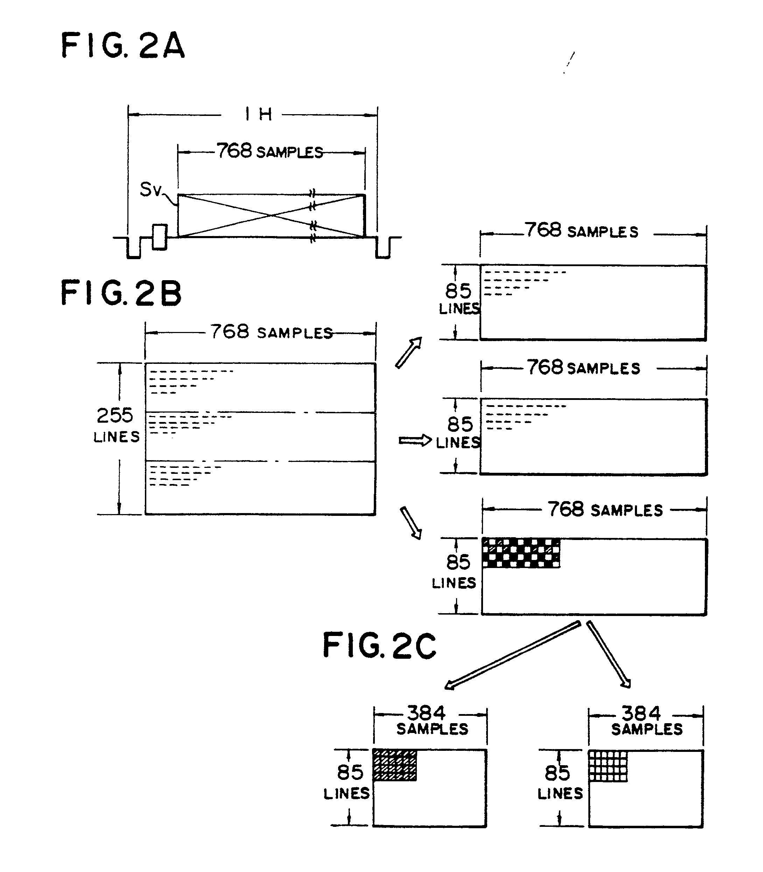

Referring to Figure 1, a video recording system 100 of a DVTR to which the present invention is applied includes a video signal input terminal 101 which receives a composite video signal Sv having 255 active lines in each field in an analogue form as shown in Figure 2A. The composite video signal is supplied from the terminal 101 to an analogue-to-digital (A/D) converter 102 in which it is converted, for example, into 8-bit symbols or words at a predetermined sampling frequency, for example, $4f_{sc}$ where $f_{sc}$ is the colour sub-carrier frequency. For a colour television signal of the NTSC system, 768 active samples are provided for each horizontal period or line (H) as shown in Figure 2A.

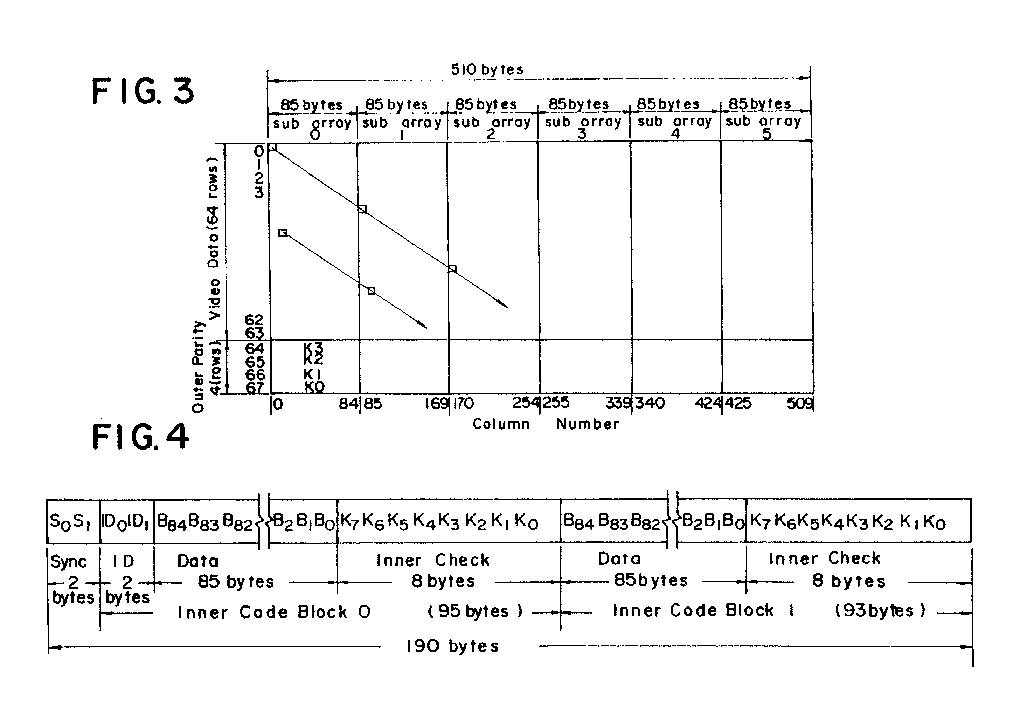

The digitized data from the A/D converter 102 are supplied to an inter-sector shuffling circuit 103 in which the sampled data for each field are sequentially divided into three segments in the vertical direction of the field, with the result that each segment contains the data for 85 lines each including 768 pixels, or 65280 samples as shown in Figure 2B. Moreover, the data of each segment are distributed over two sectors; channel 0 and channel 1, in such a manner that the same data are alternately distributed to the two sectors, each of which includes the data from 85 lines, each sector including 384 pixels from each line, or 32640 samples as shown in Figure 2C. In the inter-sector shuffling circuit 103, the data of the first line in the respective sectors, that is 384 samples, are distributed in a certain way, for example, to the first columns (columns 0, 85, 170, 255, 340, 425) of sub-arrays 0 to 5 of a matrix with an interleaving as shown in Figure 3, and the data of the second line are distributed in another way, for example, to the second columns (columns 1, 86, 171, 256, 341, 426) of the sub-arrays with a predetermined offset starting point as shown in Figure 3.

The data of 32640 samples in each of the sectors thus shuffled are supplied to an outer error correction code encoder 104 in which the data in each sector are encoded into data with four parity or redundant words derived according to a Reed-Solomon Code in every outer code block, which comprises the data of each column of the matrix, as shown in Figure 3. So far the data of two sectors are all handled in the circuits 103 and 104.

The thus arranged outer-coded data of respective sectors are supplied to a pair of intra-sector shuffling circuits 106a and 106b through a de-multiplexer 105. The intra-sector shuffling circuits 106a and 106b each include a field memory, a write address generator and a read address generator (not shown). The data of the outer code blocks are supplied to the field memory in the columns 0, 85, 170, 255, 340, 425 and so on, according to its generating order, under control of the write address generator so as to be shuffled and ideally arranged in matrix form, each of 64 x 510 samples as shown in Figure 3.

The data of 32640 samples in each of the sectors thus shuffled are read out from the field memory in the direction of the row of the matrix shown in Figure 3 for generating the inner code blocks under control of the read address generator, whereby the outer code rows are read out first.

The shuffling process operates identically for all segments of all video fields. It is assumed that L is the television line number within a video segment:

L = 0, 1, ...., 84

h is the horizontal sample location within each line L

h = 0, 1, ...., 76

ih is the horizontal sample index following the channel distribution process or inter-sector shuffling mentioned above

ih = integer (h/2)

ih = 0, 1, ..., 383: where integer (x) means the largest integer less than or equal to x.

It is also assumed that

Oblock is the outer block number within each line L

Oblock = 0, 1, ..., 5; and

Obyt is the sample number within outer block Oblock

Obyt = 0, 1, ..., 63: whereby the outer code parity words are not included in the intra-line shuffling process.

Then sample Obyt within outer block Oblock is mapped to the television screen according to the following formula:

$$ih = (12 \cdot L + 277 \cdot Oblock + 258 \cdot Obyt) \bmod 384.$$

The outer error correction code places check redundant words $K_3$, $K_2$, $K_1$ and $K_0$ in locations Obyt = 64, 65, 66 and 67 respectively. The word at the location Obyt in the outer block Oblock is placed in the sector memory array at location (Row, Col) where:

Row = Obyt and Col = L + 85 $\cdot$ Oblock.

The sector memory array data of channel 0 is written to tape first by column order (0, 1, ..., 509) then by descending row order (67, 66, ...., 2, 1, 0). For the sector memory of channel 1, the column order is the same as for channel 0, but the row order is different. It is assumed that R0 and R1 are the row address for the segment memory of channel 0 and channel 1 respectively, as the data are written to tape. Then R1 is given by the following formula:

R1 = (R0 + 32) mod 64, $0 \le R1 \le 63$; = R0, $64 \le R0 \le 67$.

The data from the intra-sector shuffling circuits 106a and 106b are supplied to respective multiplexers 107a and 107b for the addition thereto, in a time-sharing manner, of a digital audio data signal as described below.

The resulting multiplexed signals are supplied to respective multiplexers 108a and 108b for the addition thereto, in a time-sharing manner, of a synchronizing (Sync) signal and an identifying (ID) signal supplied by respective synchronizing and identifying signal generating circuit 109a and 109b.

One or more analogue audio signals which are received at an audio signal input terminal 110 are supplied to an A/D converter 111 in which it is converted, for example, into 16-bit samples at a predetermined sampling frequency, for example 48 kHz. The digitized data from the A/D converter 111 are supplied to a memory circuit 112 and subjected to outer error correction code encoding and shuffling under control of an outer error correction code generating and shuffling controlling circuit 113 in a similar manner as the video data. The encoded and shuffled digital data are supplied to the multiplexers 107a and 107b as described above.

The resulting multiplexed signal is supplied to respective inner error correction code encoders 114a and 114b for encoding into synchronizing (Sync) blocks of which one is shown in Figure 4. Each of the Sync blocks consists of two bytes of synchronizing data $S_0$ and $S_1$, a first inner code block formed of 85 bytes of data $B_0$ to $B_{84}$ added to two bytes of ID data $ID_0$ and $ID_1$, and eight bytes of inner parity check data $K_0$ to $K_7$ are added. 204 Sync blocks as in Figure 4 form each video sector, and 24 Sync blocks as in Figure 4 form four audio sectors 0 to 3 each including 6 Sync blocks.

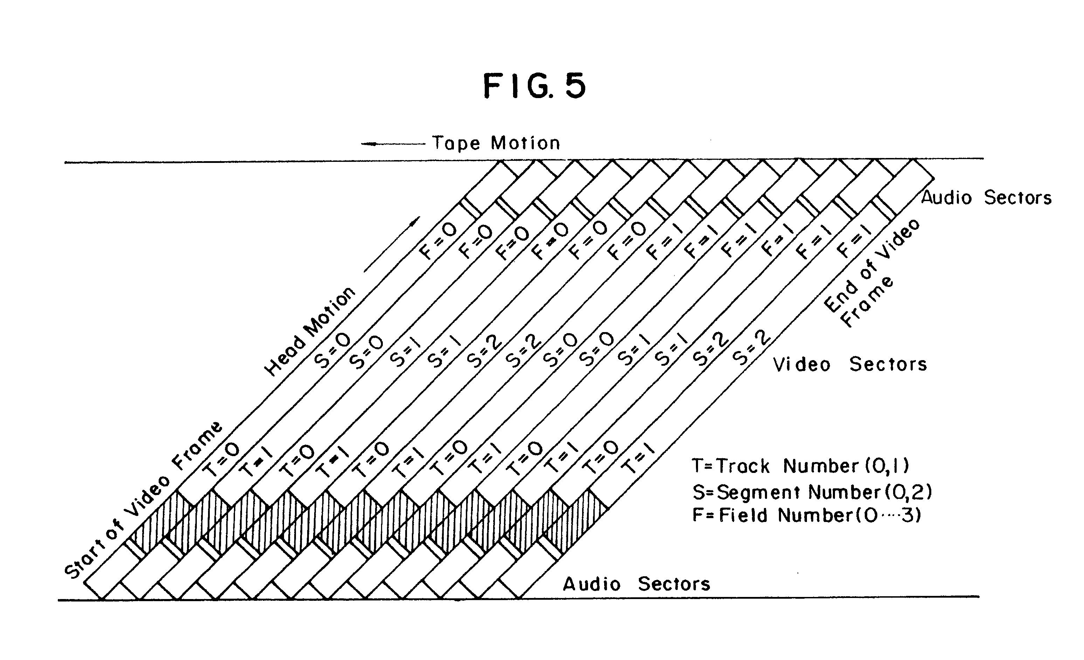

The thus arranged data are subjected to a code modulation, such as that of a Modified Miller Code ($M_2$ Code), by respective channel coding circuits 116a and 116b, after the data of one of the sectors has been delayed by a predetermined amount by a delay circuit 115 for adjusting the time delay due to the head arrangement, and are then supplied through respective recording amplifiers 117a and 117b for recording on a tape T, as shown in Figure 5, by each of a plurality of azimuth recording heads 118a and 118b mounted on a rotary head drum (not shown). In the format shown in Figure 5, the data of one frame of the video signal are recorded in twelve tracks without guard bands, with one video sector of 204 Sync blocks being recorded in each track. The first 24 Sync blocks include the redundant words for the outer error correction code as shown by hatching in Figure 5. Accordingly, the ID signal for each Sync block having the format shown in Figure 4 indicates the respective Sync block number and sector ID. The same data of the audio signal are recorded before and after one video sector of 204 Sync blocks, with edit gaps in each track, so as to be recorded twice.

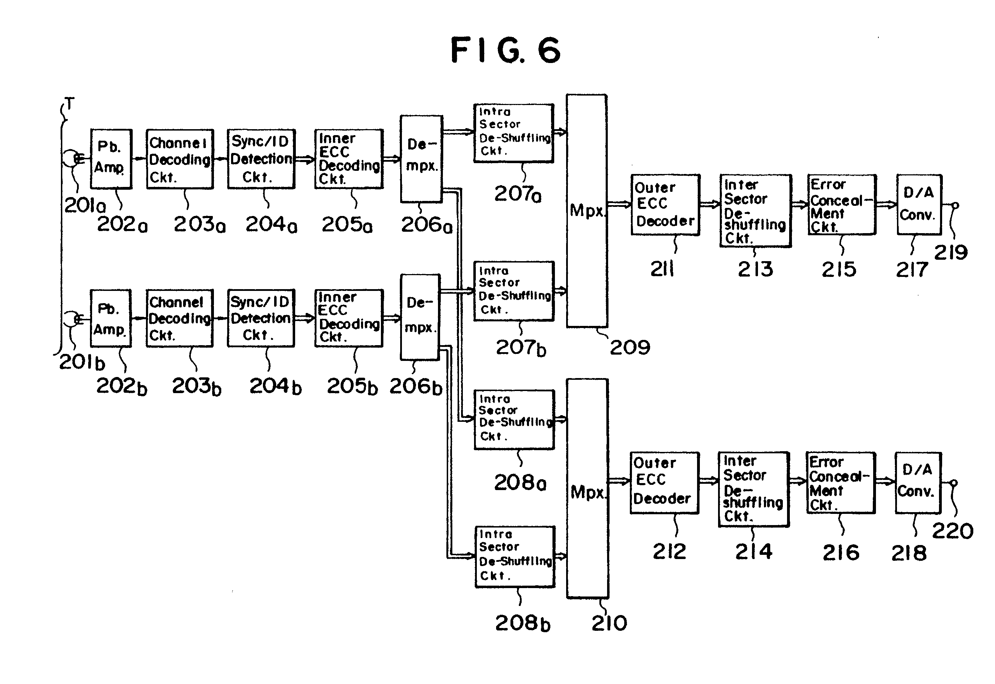

Referring now to Figure 6, it will be seen that, in a reproducing system 200 of the DVTR to which the present invention is applied, data are reproduced from the tape T by reproducing heads 201a and 201b and supplied therefrom through playback amplifiers 202a and 202b to channel decoding circuits 203a and 203b by which the $M_2$ coded signal is converted to a signal of a non-return-to-zero (NRZ) modulation system, and then fed to Sync signal/ID signal detecting circuits 204a and 204b. The detecting circuits 204a and 204b detect the Sync signal for determining the Sync block to which the data belongs and, at the same time, the ID signal is detected for determining the following signal processing to which each sample of the data is to be subjected. More particularly, since the the detected ID signal contains the sector ID and the Sync block number in such identified sector, if the sequential order of the samples within one Sync block is considered, it is possible to determine the absolute address of the respective samples in the Sync block. Therefore, the detecting circuits 204a and 204b are effective to extract the video data as well as the respective address thereof.

The data supplied from the detecting circuits 204a and 204b are supplied to inner error correction code decoding circuits 205a and 205b in which it is subjected to error detection and correction processing by using the inner code parity, and any error in the respective ID signal is also detected. If an error in the data constituting the ID signal cannot be corrected, the address of data in the corresponding Sync block is not reliable, so that data of that Sync block are not transferred to the next stage formed by inter-sector de-shuffling and time-base correction circuits 207a, 207b, 208a and 208b. On the other hand, if the ID signal is corrected but the error in the video data is not corrected, an error flag is added to the video data and transferred therewith to the next stage.

More specifically, the data subjected to the error correction process in the inner error correction code decoding circuit 205 and the addresses of such data are supplied through de-multiplexers 206a and 206b to the intra-sector de-shuffling and time-base correction circuits 207a and 207b for video data, each of which have a field memory and a write address generator and a read address generator (not shown), and to the intra-sector de-shuffling and time-base correction circuits 208a and 208b for audio data in which the data is de-shuffled to the data arrangement of the outer code and then supplied through multiplexers 209 and 210 to an outer error correction code decoding circuit 211 for video data and an outer error correction code decoding circuit 212 for audio data. In the decoding circuits 211 and 212, error correction processing is carried out with reference to the error flags added by the inner error correction code decoding circuits 205a and 205b. Here again, if the error is not corrected fully in the decoding circuits 211 and 212, an error flag is added to the data and supplied therewith to an inter-sector de-shuffling circuit 213 for video data and an inter-sector de-shuffling circuit 214 for audio data in which the original data arrangement is restored. Thereafter, any uncorrected error in the data identified by the error flag added thereto is concealed or interpolated by a known concealing or interpolating technique in an error concealment circuit 215 for video data and an error concealment circuit 216 for audio data. Finally, the error-concealed or interpolated video data are converted into an analogue video signal by a digital-to-analogue (D/A) converter 217 and supplied through a video signal output terminal 218, and the error-concealed or interpolated audio data is converted into one or more channel analogue audio signal by a D/A converter 219 and supplied through an audio signal output terminal 220.

By way of summary, in the embodiment, the redundant words of the outer error correction code are recorded on each track at the beginning portion of the video sector followed by the actual video data. Accordingly, even if an error occurs in the digital data at the beginning portion of the video sector when the recorded signal is reproduced by reproducing heads from oblique tracks so that the digital data is recovered, almost all of the error is included in the redundant words of the outer error correction code. Therefore, the error symbols of video and audio data can be corrected or marked with error flags for subsequent correction or concealment.

## Claims

1. A method of recording digital data, the method comprising the steps of:

dividing a digital data series into respective blocks each including a first predetermined number of data symbols;

generating outer error correction code blocks each including said first predetermined number of data symbols and a second predetermined number of redundant symbols;

generating inner correction code blocks each including a third predetermind number of data symbols and a fourth predetermined number of redundant symbols; and

recording said digital data series with said redundant symbols of said outer error correction code block and inner error correction code block on oblique tracks of a tape recording medium;

characterized in that:

said redundant symbols of said outer error correction code block are recorded first and followed by the said data symbols and said redundant symbols of said inner error correction code block on said tracks.

2. An apparatus for recording digital data, the apparatus comprising:

means (103) for dividing a digital data series into respective blocks each including a first predetermined number of data symbols;

means (104) for generating outer error correction code blocks each including said first predetermined number of data symbols and a second predetermined number of redundant symbols;

means (114a, 114b) for generating inner error correction code blocks each including a third predetermined number of data symbols and a fourth predetermined number of redundant symbols; and

means (115, 116a, 116b, 117a, 117b, 118a, 118b) for recording said digital data series with said redundant symbols of said outer error correction code block and inner error correction code block on oblique tracks of a tape recording medium (T);

characterized in that:

said redundant symbols of said outer error correction code block are recorded first and followed by said data symbols and said redundant symbols of said inner error correction code block on said tracks.

3. A method of reproducing digital data, the method comprising the steps of:

reproducing a digital data series with redundant symbols of an outer error correction code block and an inner error correction code block, whereby said redundant symbols are generated in such a manner that said digital data series is divided into respective blocks each including a first predetermined number of data symbols, said outer error correction code block is generated so as to include said first predetermined number of data symbols and a second predetermined number of said redundant symbols, and said inner error correction code block is generated so as to include a third predetermined number of data symbols and a fourth predetermined number of said redundant symbols;

decoding said inner error correction code block including said third predetermined number of data symbols and said fourth predetermined number of redundant symbols;

tagging an error flag if a predetermined number of error symbols exist in said inner error correction code block; and

decoding said outer error correction code block including said first predetermined number of data symbols and said second predetermined number of redundant symbols with said error flag to derive said digital data series;

characterized in that:

said redundant symbols of said outer error correction code block are reproduced first, followed by said data symbols and said redundant symbols of said inner error correction code block from oblique tracks of a tape recording medium (T);

4. An apparatus for reproducing digital data, the apparatus comprising:

means (201a, 201b, 202a, 202b) for reproducing a digital data series with redundant symbols of an outer error correction code block and an inner error correction code block, whereby said redundant symbols are generated in such a manner that said series of digital data is divided into respective blocks each including a first predetermined number of data symbols, said outer error correction code block is generated so as to include said first predetermined number of data symbols and a second predetermined number of said redundant symbols, and said inner error correction code block is generated so as to include a third predetermined number of data symbols and a fourth predetermined number of said redundant symbols;

means (205a, 205b) for decoding said inner error correction code block including said third predetermined number of said data symbols and said fourth predetermined number of redundant symbols;

means (205a, 205b) for tagging an error flag if a predetermined number of error symbols exists in said inner error correction code block; and means (211, 212) for decoding said outer error correction code block including said first predetermined number of data symbols and said second predetermined number of redundant symbols with said error flag to derive said digital data series;

characterized in that:

said redundant symbols of said outer error correction code block are reproduced first, followed by said data symbols and said redundant symbols of said inner error correction code block from oblique tracks of a tape recording medium (T).

**Revendications**

1. Procédé d'enregistrement de données numériques, le procédé comprenant les étapes de :

division d'une série de données numériques en blocs respectifs, chacun incluant un premier nombre prédéterminé de symboles de données ;

génération de blocs de code de correction d'erreur externe, chacun incluant ledit premier nombre prédéterminé de symboles de données et un second nombre prédéterminé de symboles de redondance ;

génération de blocs de code de correction interne, chacun incluant un troisième nombre prédéterminé de symboles de données et un quatrième nombre prédéterminé de symboles de redondance ; et

enregistrement de ladite série de données numériques avec lesdits symboles de redondance dudit bloc de code de correction d'erreur externe et dudit bloc de code de correction d'erreur interne sur des pistes obliques d'un support d'enregistrement du type bande ; caractérisé en ce que :

lesdits symboles de redondance dudit bloc de code de correction d'erreur externe sont enregistrés en premier et sont suivis desdits symboles de données et desdits symboles de redondance dudit bloc de code de correction d'erreur interne sur lesdites pistes.

2. Appareil d'enregistrement de données numériques, l'appareil comprenant :

un moyen (103) pour diviser une série de données numériques en blocs respectifs, chacun incluant un premier nombre prédéterminé de symboles de données ;

un moyen (104) pour générer des blocs de code de correction d'erreur externe, chacun incluant ledit premier nombre prédéterminé de symboles de données et un second nombre prédéterminé de symboles de redondance ;

un moyen (114a, 114b) pour générer les blocs de code de correction d'erreur interne, chacun incluant un troisième nombre prédéterminé de symboles de données et un quatrième nombre prédéterminé de symboles de redondance ; et

un moyen (115, 116a, 116b, 117a, 117b, 118a, 118b) pour enregistrer ladite série de données numériques avec lesdits symboles de redondance dudit bloc de code de correction d'erreur externe et dudit bloc de code de correction d'erreur interne sur des pistes obliques d'un support d'enregistrement du type bande (T) ;

caractérisé en ce que :

lesdits symboles de redondance dudit bloc de code de correction d'erreur externe sont enregistrés en premier et sont suivis desdits symboles de données et desdits symboles de redondance dudit bloc de code de correction d'erreur interne sur lesdites pistes.

3. Procédé de reproduction de données numériques, le procédé comprenant les étapes de :

reproduction d'une série de données numériques avec des symboles de redondance d'un bloc de code de correction d'erreur externe et d'un bloc de code de correction d'erreur interne, lesdits symboles de redondance étant générés d'une manière telle que ladite série de données numériques est divisée en blocs respectifs, chacun incluant un premier nombre prédéterminé de symboles de données, ledit bloc de code de correction d'erreur externe étant généré de manière à inclure ledit premier nombre prédéterminé de symboles de données ainsi qu'un second nombre prédéterminé desdits symboles de redondance et ledit bloc de code de correction d'erreur interne étant généré de manière à inclure un troisième nombre prédéterminé de symboles de données ainsi qu'un quatrième nombre prédéterminé desdits symboles de redondance ;

décodage dudit bloc de code de correction d'erreur interne qui inclut ledit troisième nombre prédéterminé de symboles de données et ledit quatrième nombre prédéterminé de symboles de redondance ;

positionnement d'un indicateur d'erreur si un nombre prédéterminé de symboles d'erreur existe dans ledit bloc de code de correction d'erreur interne ; et

décodage dudit bloc de code de correction d'erreur externe qui inclut ledit premier nombre prédéterminé de symboles de données et ledit second nombre prédéterminé de symboles de redondance avec ledit indicateur d'erreur afin de dériver ladite série de données numériques ;
caractérisé en ce que :

lesdits symboles de redondance dudit bloc de code de correction d'erreur externe sont reproduits en premier, suivis desdits symboles de données et desdits symboles de redondance dudit bloc de code de correction d'erreur interne, à partir de pistes obliques d'un support d'enregistrement du type bande (T).

4. Appareil de reproduction de données numériques, l'appareil comprenant :

un moyen (201a, 201b, 202a, 202b) de reproduction d'une série de données numériques avec des symboles de redondance d'un bloc de code de correction d'erreur externe et d'un bloc de code de correction d'erreur interne, lesdits symboles de redondance étant générés d'une manière telle que lesdites séries de données numériques sont divisées en blocs respectifs, chacun incluant un premier nombre prédéterminé de symboles de données, ledit bloc de code de correction d'erreur externe étant généré de manière à inclure ledit premier nombre prédéterminé de symboles de données et un second nombre prédéterminé desdits symboles de redondance, et ledit bloc de code de correction d'erreur interne étant généré de manière à inclure un troisième nombre prédéterminé de symboles de données et un quatrième nombre prédéterminé desdits symboles de redondance ;

un moyen (205a, 205b) de décodage dudit bloc de code de correction d'erreur interne qui inclut ledit troisième nombre prédéterminé desdits symboles de données et ledit quatrième nombre prédéterminé de symboles de redondance ;

un moyen (205a, 205b) de positionnement d'un indicateur d'erreur si un nombre prédéterminé de symboles d'erreur existe dans ledit bloc de code de correction d'erreur interne ; et

un moyen (211, 212) de décodage dudit bloc de code de correction d'erreur externe qui inclut ledit premier nombre prédéterminé de symboles de données et ledit second nombre prédéterminé de symboles de redondance avec ledit indicateur d'erreur afin de dériver ladite série de données numériques ;
caractérisé en ce que :

lesdits symboles de redondance dudit bloc de code de correction d'erreur externe sont reproduits en premier, suivis desdits symboles de données et desdits symboles de redondance dudit bloc de code de correction d'erreur interne, à partir de pistes obliques d'un support d'enregistrement du type bande (T).

## Patentansprüche

1. Verfahren zum Aufzeichnen von digitalen Daten mit folgenden Verfahrensschritten:

Aufteilen einer digitalen Datenreihe in einzelne Blöcke, die jeweils eine erste vorbestimmte Anzahl von Datensymbolen enthalten,

Erzeugen von äußeren Fehlerkorrektur-Kodeblöcken, die jeweils die erste vorbestimmte Anzahl von Datensymbolen und eine zweite vorbestimmte Anzahl von redundanten Symbolen enthalten,

Erzeugen von inneren Fehlerkorrektur-Kodeblöcken, die jeweils eine dritte vorbestimmte Anzahl von Datensymbolen und eine vierte vorbestimmte Anzahl von redundanten Symbolen enthalten, und

Aufzeichnen der digitalen Datenreihe mit den redundanten Symbolen des äußeren Fehlerkorrektur-Kodeblocks und des inneren Fehlerkorrektur-Kodeblocks auf Schrägspuren eines bandförmigen Aufzeichnungsmediums,
**dadurch gekennzeichnet,**
daß zuerst die redundanten Symbole des äußeren Fehlerkorrektur-Kodeblocks,gefolgt von den Datensymbolen und den redundanten Symbolen des inneren Fehlerkorrektur-Kodeblocks, in den genannten Schrägspuren aufgezeichnet werden.

2. Gerät zum Aufzeichnen von digitalen Daten mit

Mitteln (103) zum Aufteilen einer digitalen Datenreihe in einzelne Blöcke, die jeweils eine erste vorbestimmte Anzahl von Datensymbolen enthalten,

Mitteln (104) zum Erzeugen von äußeren Fehlerkorrektur-Kodeblöcken, die jeweils die erste vorbestimmte Anzahl von Datensymbolen und eine zweite vorbestimmte Anzahl von redundanten Symbolen enthalten,

Mitteln (114a, 114b) zum Erzeugen von inneren Fehlerkorrektur-Kodeblöcken, die jeweils eine dritte vorbestimmte Anzahl von Datensymbolen und eine vierte vorbestimmte Anzahl von redundanten Symbolen enthalten, und

Mitteln (115, 116a, 116b, 117a, 117b, 118a, 118b) zum Aufzeichnen der digitalen Datenreihe mit den redundanten Symbolen des äußeren Fehlerkorrektur-Kodeblocks und des inneren Fehlerkorrektur-Kodeblocks auf Schrägspuren eines bandförmigen Aufzeichnungsmediums (T),
**dadurch gekennzeichnet,**
daß zuerst die redundanten Symbole des äußeren Fehlerkorrektur-Kodeblocks,gefolgt von den Datensymbolen und den redundanten Symbolen des inneren Fehlerkorrektur-Kodeblocks, in den genannten Schrägspuren aufgezeichnet werden.

3. Verfahren zur Wiedergabe von digitalen Daten mit folgenden Verfahrensschritten:

Wiedergeben einer digitalen Datenreihe mit redundanten Symbolen eines äußeren Fehlerkorrektur-Kodeblocks und eines inneren Fehlerkorrektur-Kodeblocks, wobei die redundanten Symbole in der Weise erzeugt werden, daß die digitale Datenreihe in einzelne Blöcke aufgeteilt wird, die jeweils eine erste vorbestimmte Anzahl von Datensymbolen enthalten, wobei der äußere Fehlerkorrektur-Kodeblocks in der Weise erzeugt wird, daß er eine erste vorbestimmte Anzahl von Datensymbolen und eine zweite vorbestimmte Anzahl der redundanten Symbole enthält und wobei der innere Fehlerkorrektur-Kodeblock in der Weise erzeugt wird, daß er eine dritte vorbestimmte Anzahl von Datensymbolen und eine vierte vorbestimmte Anzahl der redundanten Symbole enthält,

Dekodieren des inneren Fehlerkorrektur-Kodeblocks, der die dritte vorbestimmte Anzahl von Datensymbolen und die vierte vorbestimmte Anzahl von redundanten Symbolen enthält,

Setzen eines Fehler-Flags, wenn in dem inneren Fehlerkorrektur-Kodeblock eine vorbestimmte Anzahl von Fehlersymbolen vorhanden ist, und

Dekodieren des die erste vorbestimmte Anzahl von Datensymbolen und die zweite vorbestimmte Anzahl von redundanten Symbolen mit dem Fehler-Flag enthaltenden äußeren Fehlerkorrektur-Kodeblocks zur Herleitung der digitalen Datenreihe,

**dadurch gekennzeichnet,**

daß zuerst die redundanten Symbole des äußeren Fehlerkorrektur-Kodeblocks,gefolgt von den Datensymbolen und den redundanten Symbolen des inneren Fehlerkorrektur-Kodeblocks, von Schrägspuren eines bandförmigen Aufzeichnungsmediums wiedergegeben werden.

4. Gerät zur Wiedergabe von digitalen Daten mit

Mitteln (201a, 201b, 202a, 202b) zum Wiedergeben einer digitalen Datenreihe mit redundanten Symbolen eines äußeren Fehlerkorrektur-Kodeblocks und eines inneren Fehlerkorrektur-Kodeblocks, wobei die redundanten Symbole in der Weise erzeugt werden, daß die digitale Datenreihe in einzelne Blöcke aufgeteilt wird, die jeweils eine erste vorbestimmte Anzahl von Datensymbolen enthalten, wobei der äußere Fehlerkorrektur-Kodeblocks in der Weise erzeugt wird, daß er eine erste vorbestimmte Anzahl von Datensymbolen und eine zweite vorbestimmte Anzahl der redundanten Symbole enthält und wobei der innere Fehlerkorrektur-Kodeblock in der Weise erzeugt wird, daß er eine dritte vorbestimmte Anzahl von Datensymbolen und eine vierte vorbestimmte Anzahl der redundanten Symbole enthält,

Mitteln (205a, 205b) zum Dekodieren des inneren Fehlerkorrektur-Kodeblocks, der die dritte vorbestimmte Anzahl von Datensymbolen und die vierte vorbestimmte Anzahl von redundanten Symbolen enthält,

Mitteln (205a, 205b) zum Setzen eines Fehler-Flags, wenn in dem inneren Fehlerkorrektur-Kodeblock eine vorbestimmte Anzahl von Fehlersymbolen vorhanden ist, und

Mitteln (211, 212) zum Dekodieren des die erste vorbestimmte Anzahl von Datensymbolen und die zweite vorbestimmte Anzahl von redundanten Symbolen mit dem Fehler-Flag enthaltenden äußeren Fehlerkorrektur-Kodeblocks zur Herleitung der digitalen Datenreihe,

**dadurch gekennzeichnet,**

daß zuerst die redundanten Symbole des äußeren Fehlerkorrektur-Kodeblocks,gefolgt von den Datensymbolen und den redundanten Symbolen des inneren Fehlerkorrektur-Kodeblocks, von Schrägspuren eines bandförmigen Aufzeichnungsmediums wiedergegeben werden.

# FIG. 1

EP 0 267 029 B1

# FIG. 2A

# FIG. 2B

# FIG. 2C

## FIG. 3

510 bytes

| 85 bytes | 85 bytes | 85 bytes | 85 bytes | 85 bytes | 85 bytes |
|---|---|---|---|---|---|
| sub array 0 | sub array 1 | sub array 2 | sub array 3 | sub array 4 | sub array 5 |

Video Data (64 rows)

0
1
2
3

62
63

Outer Parity 4 (rows)

64 $K_3$
65 $K_2$
66 $K_1$
67 $K_0$

0    84|85    169|170    254|255    339|340    424|425    509

Column Number

## FIG.4

| $S_0 S_1$ | $ID_0 ID_1$ | $B_{84} B_{83} B_{82}$ ⋯ $B_2 B_1 B_0$ | $K_7 K_6 K_5 K_4 K_3 K_2 K_1 K_0$ | $B_{84} B_{83} B_{82}$ ⋯ $B_2 B_1 B_0$ | $K_7 K_6 K_5 K_4 K_3 K_2 K_1 K_0$ |
|---|---|---|---|---|---|
| Sync<br>2 bytes | ID<br>2 bytes | Data<br>85 bytes | Inner Check<br>8 bytes | Data<br>85 bytes | Inner Check<br>8 bytes |

Inner Code Block 0     (95 bytes)     Inner Code Block 1     (93 bytes)

190 bytes

# FIG. 5

Tape Motion

Audio Sectors

Head Motion

F=0, F=0, F=0, F=0, F=0, F=0, F=1, F=1, F=1, F=1, F=1, F=1

End of Video Frame

S=0, S=0, S=1, S=1, S=2, S=2, S=0, S=0, S=1, S=1, S=2, S=2

Video Sectors

Start of Video Frame

T=0, T=1, T=0, T=1, T=0, T=1, T=0, T=1, T=0, T=1, T=0, T=1

T=Track Number (0,1)
S=Segment Number (0,2)
F=Field Number (0···3)

Audio Sectors

EP 0 267 029 B1

# F I G. 6

EP 0 267 029 B1